# EUROPÄISCHE PATENTSCHRIFT

(11) **EP 0 713 990 B1**
(45) Veröffentlichungstag und Bekanntmachung des Hinweises auf die Patenterteilung: **10.03.1999**
(21) Anmeldenummer: 95117260.0
(22) Anmeldetag: 02.11.1995
(51) Int. Cl.: F16J 15/32

(54) **Dichtung für bewegte Bauteile**
Sealing for moving parts
Joint d'étanchéité pour pièces en mouvement

(30) Priorität: 25.11.1994 DE 4442081
(43) Veröffentlichungstag der Anmeldung: 29.05.1996
(73) Patentinhaber: Dichtungstechnik G. Bruss GmbH & Co. KG, D-22955 Hoisdorf (DE)
(72) Erfinder: Heine, Steffen, Dr., D-23898 Kühsen (DE); Kinzel, Michael, D-23619 Badendorf (DE); Schumacher, Heiko, D-23843 Bad Oldesloe (DE)
(74) Vertreter: Liesegang, Roland, Dr.-Ing.

(56) Entgegenhaltungen:
- EP-A- 0 284 772
- WO-A-91/00887
- DE-A- 3 137 111
- DE-A- 3 542 211
- PATENT ABSTRACTS OF JAPAN vol. 6 no. 250 (C-139) ,9.Dezember 1982 & JP-A-57 147527 (MITSUBISHI)

## Beschreibung

Die Erfindung betrifft eine Dichtung für bewegte Bauteile, wie Kolbenstangen oder Wellen, gemäß dem Oberbegriff des Anspruchs 1 (EP-A-0 284 772).

Aus der EP 0 615 085 ist ein integrierter Wellendichtring mit einem als Druckgußteil aus Leichtmetall bestehenden Tragkörper bekannt, an dem ein Dichtelement aus einem PTFE-Kunststoff über einen elastomeren Werkstoff anvulkanisiert ist.

Ferner ist eine Dichtung bekannt (US-PS 5,198,053), bei der ein Dichtelement aus PTFE-Kunststoff über eine Zwischenschicht aus Perfluorpolymer (FEP) mit einem metallischen Versteifungsring verbunden ist.

Die anti-adhäsiven Eigenschaften eines PTFE-Kunststoffes machen diesen für eine berührende Dichtung sehr geeignet, bei der geringe Reibung zwischen dem Dichtelement und dem relativ dazu rotatorisch oder translatorisch bewegten Bauteil gefordert ist. Diese anti-adhäsiven Eigenschaften führen jedoch oft zu einer schlechten Haftung an einem Tragkörper der Dichtung, was die Verbindung mit diesem Tragkörper ungemein erschwert.

Deshalb sind die PTFE-Dichtelemente im Stand der Technik an ihre Tragkörper entweder über haftvermittelnde Zwischenelemente oder unmittelbar stoffschlüssig angebunden, wobei jedoch die mit dem PTFE-Dichtelement zu verbindenden Flächen zur Erzielung einer befriedigenden Haftung aufwendig vorbehandelt werden müssen, z.B. mit einem Ätzmittel, wie in Ammoniak gelöstem Natrium (EP-A-0 284 772).

Der Erfindung liegt die Aufgabe zugrunde, eine Dichtung mit einem Tragkörper und einem PTFE-Dichtelement sowie ein Verfahren zur Herstellung einer solchen Dichtung zu schaffen, bei welcher eine direkte, dauerhafte Verbindung zwischen Tragkörper und Dichtelement in einfacher Weise realisiert ist.

Zur Lösung dieser Aufgabe dienen eine Dichtung nach Anspruch 1 und ein Verfahren nach Anspruch 9.

Vorteilhafte Ausgestaltungen der Erfindung sind in den Unteransprüchen angegeben. Insbesondere ist eine Weiterbildung der Erfindung vorteilhaft, bei welcher zusätzlich zu der stoffschlüssigen Verbindung eine formschlüssige Verbindung vorgesehen ist, die gemäß einer Weiterbildung des erfindungsgemäßen Verfahrens durch dauerhaftes Verformen des Dichtelements beim Schließen der Spritzgießform zum Bilden einer Hinterschneidung erzeugt ist, hinter die beim nachfolgenden Einspritzen Kunststoff des Tragkörpers fließt.

Die Erfindung ist im folgenden anhand schematischer Zeichnungen an Ausführungsbeispielen mit weiteren Einzelheiten näher erläutert. Es zeigen:
- Fig. 1: in einem axialen Halbschnitt eine Dichtung für eine Kolbenstange eines Kolbens;
- Fig. 2 bis 5: unterschiedliche Ausführungen von Dichtungen für Wellen in axialen Halbschnitten;
- Fig. 6: in einem Axialschnitt eine integrierte Dichtung für zwei parallele Wellen gemäß der Erfindung;
- Fig. 7: eine Dichtung gemäß der Erfindung wie Fig. 2, jedoch mit formschlüssiger Verbindung zwischen Dichtelement und Tragkörper;
- Fig. 8: einen Ausschnitt VIII in Fig. 7 in größerem Maßstab;
- Fig. 9 und 10: zwei Herstellstufen einer Dichtung gemäß den Fig. 7 und 8, wobei Fig. 9 ein Formwerkzeug mit eingelegtem PTFE-Dichtelement in geöffnetem Zustand der Form und Fig. 10 das Formwerkzeug in geschlossenem Zustand zeigen.

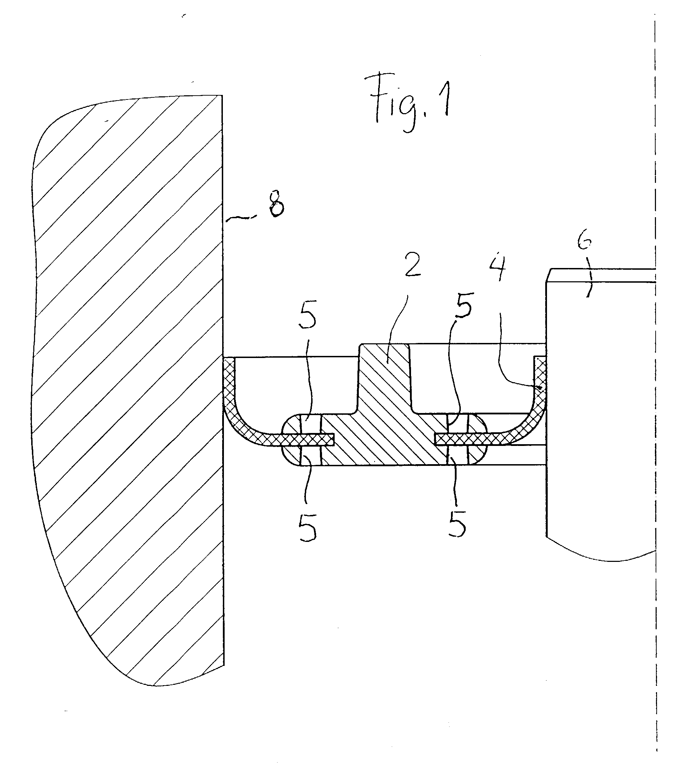

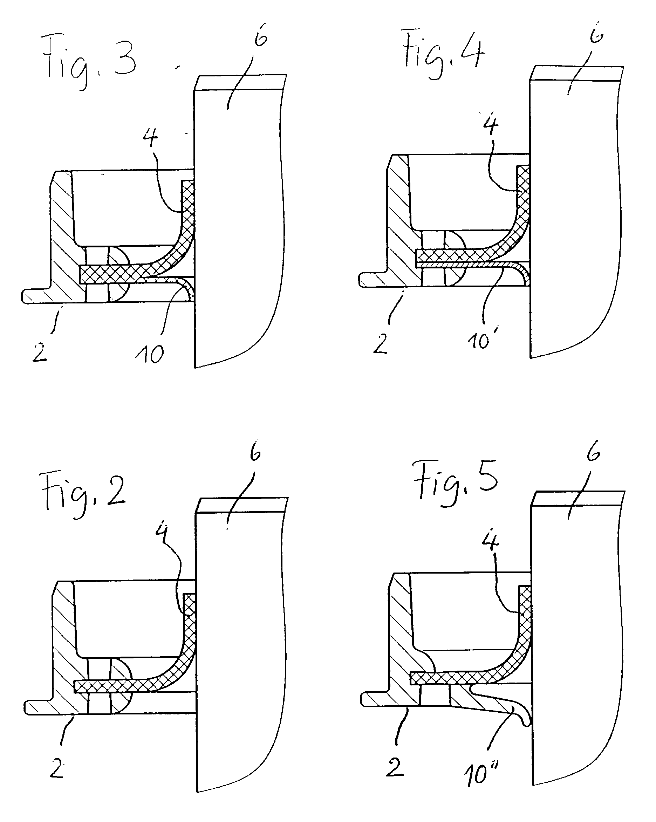

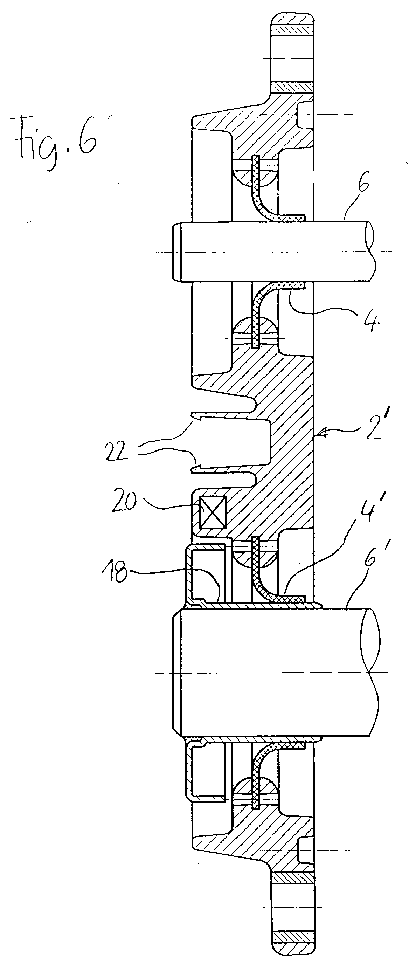

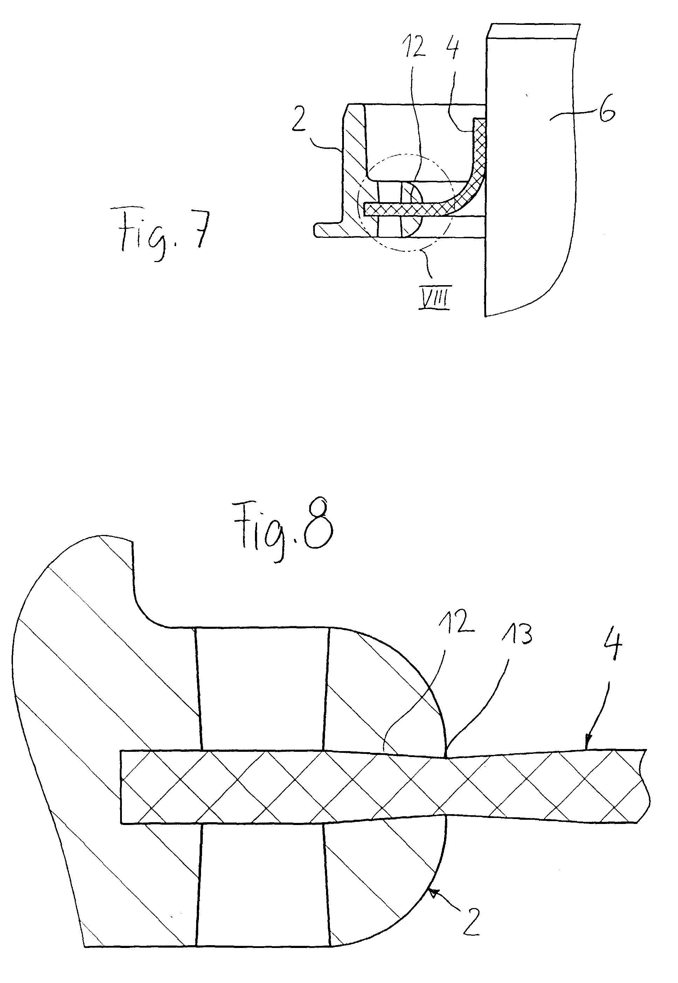

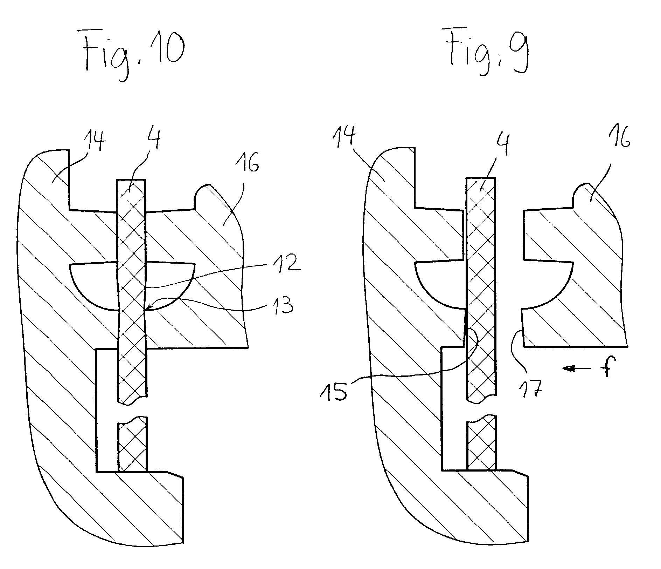

In den Figuren sind der Einfachheit halber gleiche oder funktionsgleiche Teile mit gleichen Bezugszahlen bezeichnet, und zwar mit 2 und 2' ein Tragkörper aus Kunststoff; mit 4 und 4' Dichtelemente aus einem Polytetrafluorethylen (PTFE)-Compound (ein durch verschiedene, für Dichtungen übliche Füllstoffe modifizierter PTFE-Kunststoff); mit 5 leicht konische Bohrungen, die durch Stifte zur axialen Fixierung des Dichtelementes 2 in einer Spritzgießform erzeugt sind; mit 6 ein bewegtes, abzudichtendes Bauteil, in Fig. 1 eine translatorisch bewegte Kolbenstange und in den Fig. 2 bis 5 und 7 drehende Wellen 6, wobei eine zweite abzudichtende Welle in Fig. 6 mit 6' bezeichnet ist; mit 8 eine Zylinderwand in Fig. 1; mit 10 eine mit dem Dichtelement einteilige Schutzlippe in Fig. 3; mit 10' eine separat vom Dichtelement 4 vorgesehene berührende Schutzlippe in Fig. 4; mit 10'' eine berührungsfreie Schutzlippe als Teil des Tragkörpers 2 in Fig. 5; mit 12 eine schwach V-förmige Einschnürung bzw. Hinterschneidung im Dichtelement 4 gemäß den Fig. 7 und 8; mit 13 eine Prägekante als tiefste Stelle der Hinterschneidung 12 am radial inneren Rand des Tragkörpers gemäß Fig. 7 und 8; mit 14 und 16 zwei relativ zueinander bewegbare Formteile eines Formwerkzeuges zum Einprägen der Hinterschneidung 12 beim Schließen der Formwerkzeuge 14,16 gemäß Fig. 10 in Pfeilrichtung f gemäß Fig. 9; mit 15 und 17 gegensinnig angeschrägte Formflächen an den Formwerkzeugen 14, 16; mit 18 ein auf der zweiten Welle 6' sitzender Laufring in Fig. 6, gegenüber dem ein im gleichen Tragkörper 2'sitzendes zweites Dichtelement 4' abdichtet; mit 20 ein in den Tragkörper 2' gemäß Fig. 6 eingesetzter Sensor oder Aktor; und mit 22 am Tragkörper 2' angeformte Schnappverbindungen zur Befestigung eines nicht gezeigten weiteren Bauelementes.

Eine stoffschlüssige Verbindung zwischen dem Kunststoff des Dichtelementes 4,4' und dem Kunststoff des Tragkörpers 2,2' ist dadurch erzielt, daß dem PTFE-Compound des Dichtelementes eine geringe Menge des Kunststoffes für den Tragkörper oder einer mit diesem Kunststoff verträglichen weiteren Komponente, insbesondere aus Kunststoff beigemischt wird.

Versuche haben ergeben, daß mindestens 0,3 Gew.-% und höchstens 40 Gew.-% des Tragkörper-Kunststoffes dem PTFE-Kunststoff des Dichtelementes beigemischt werden sollten. Die besten Ergebnisse sowohl hinsichtlich guter Dichteigenschaften des Dichtelementes als auch hinsichtlich einer guten stoffschlüssigen Verbindung wurden mit einer Beimischung im Bereich von 5 bis 10 Gew.-% erzielt. Als zum Beimischen zum PTFE-Compound des Dichtelementes besonders geeignete Kunststoffe haben sich Polyphenylensulfid (PPS), Polyamid (PA) und Polyethylen (PE) erwiesen, wobei die zugehörigen Tragkörper jeweils aus den entsprechenden Kunststoffen PPS, PA bzw. PE bestanden. Die Kunststoffe von Tragkörper und Beimischung zum Kunststoff des Dichtelementes brauchen nicht identisch sondern lediglich miteinander verträglich im Sinne eines Stoffschlusses zu sein. Zum Beispiel kann dem PTFE-Compound des Dichtelementes PE zugemischt sein, während der Tragkörper aus PA gespritzt wird.

Anstelle des Beimischens der genannten Kunststoffe kann auch die Oberfläche des PTFE-Dichtelements 4 durch Inkorporieren des Tragkörper-Kunststoffes oder eines mit diesem verträglichen Kunststoff modifiziert werden. Hierzu wird dieser Kunststoff durch Aufdampfen oder Plasmapolymerisation auf die Oberfläche des Dichtelementes 4 aufgebracht. Es ist dabei bevorzugt, die Oberfläche nur in demjenigen Teilbereich zu modifizieren, welcher stoffschlüssig mit dem Tragkörper 2 direkt verbunden werden soll. Dazu wird das Dichtelement während des Aufdampfens oder der Plasmapolymerisation bis auf den genannten Teilbereich beispielsweise einfach abgedeckt.

Auf ein aufwendiges und umweltschädliches Anätzen des PTFE-Dichtelementes kann dabei verzichtet werden, einfaches Entfetten genügt.

In allen Fällen wird das durch die Beimischung bzw. die Oberflächenbehandlung modifizierte Dichtelement in die Spritzgießform zum Herstellen der Dichtung eingelegt, worauf nach Schließen der Form der Kunststoff des Tragkörpers in die Form eingespritzt wird. Dabei schmilzt das Dichtelement an dem erkaltenden Kunststoff des Tragkörpers an, so daß eine dauerhafte stoffschlüssige Verbindung erzielt wird.

Gleichzeitig kann beim Schließen der Spritzgießformorm die Hinterschneidung 12 gemäß Fig. 8 in der in Fig. 9 und 10 gezeigten Weise durch Zusammendrücken der mit Anschrägungen 15, 17 versehenen Formteile 14, 16 erzeugt werden, wobei die tiefste Stelle der Hinterschneidung 12 am der Welle 6 zugewandten Rand des Tragkörpers 2 in Form eines Absatzes oder einer Prägekante 13 ausgebildet wird (Fig. 8). Die so gebildete Hinterschneidung wird beim nachfolgenden Spritzgießen mittels Kunststoff des Tragkörpers ausgefüllt, so daß zusätzlich zu der stoffschlüssigen Verbindung auch eine formschlüssige Verbindung zwischen dem Tragkörper 2 und dem PTFE-Dichtelement hergestellt wird. Eine wie in Fig. 8 ausgebildete Hinterschneidung hat in Versuchen hinsichtlich der schwierig zu erzielenden statischen Dichtheit die besten Ergebnisse gebracht.

Im Falle der Erzeugung einer formschlüssigen Verbindung kann auf die stoffschlüssige Verbindung auch verzichtet werden und umgekehrt.

## Patentansprüche

1. Dichtung für bewegte Bauteile (6,6'), wie Kolbenstangen oder Wellen, mit einem Tragkörper sowie einem Dichtelement (4, 4') aus einem Polytetrafluorethylen (PTFE)-Kunststoff-Compound, das berührend gegenüber dem bewegten Bauteil (6,6') abdichtet und mit dem aus Kunststoff bestehenden Tragkörper (2,2') stoffschlüssig verbunden ist, dadurch **gekennzeichnet,** daß der PTFE-Kunststoff des Dichtelementes (4,4') durch Beimischung einer geringen Menge des Kunststoffes des Tragkörpers (2,2') oder einer damit verträglichen Komponente modifiziert ist, daß der Tragkörper (2) aus einem spritzfähigen Kunststoff besteht und daß eine direkte stoffschlüssige Verbindung durch Anschmelzen des Dichtelements (4,4') an den Tragkörper (2,2') beim Spritzvorgang erzielt ist.

2. Dichtung nach Anspruch 1, dadurch **gekennzeichnet,** daß die beigemischte Menge zwischen 0,3 und 40 Gew.-% liegt.

3. Dichtung nach Anspruch 1 oder 2, dadurch **gekennzeichnet,** daß die beigemischte Menge zwischen 5 und 10 Gew.-% liegt.

4. Dichtung nach einem der Ansprüche 1 bis 3, dadurch **gekennzeichnet,** daß die Oberfläche des Dichtelements (4,4') durch Inkorporieren einer Komponente des Kunststoffs des Tragkörpers oder einer damit verträglichen Komponente mindestens in demjenigen Bereich modifiziert ist, in welchem die stoffschlüssige Verbindung herzustellen ist.

5. Dichtung nach Anspruch 4, dadurch **gekennzeichnet,** daß die Oberfläche durch Aufdampfen der Komponente modifiziert ist.

6. Dichtung nach Anspruch 4, dadurch **gekennzeichnet,** daß die Oberfläche durch Plasmapolymerisation der Komponente modifiziert ist.

7. Dichtung nach einem der Ansprüche 1 bis 6, dadurch **gekennzeichnet,** daß das Dichtelement (4,4') mit dem Tragkörper (2,2') zusätzlich formschlüssig verbunden ist.

8. Dichtung nach Anspruch 7, dadurch **gekennzeichnet**, daß das Dichtelement (4) eine Hinterschneidung (12) mit einer am Rand des Tragkörpers (2) gelegenen tiefsten Stelle in Form einer Prägekante (13) hat.

9. Verfahren zum Herstellen einer Dichtung für bewegte Bauteile (6,6'), wie Kolbenstangen oder Wellen, mit einem Tragkörper (2,2') sowie einem Dichtelement (4) aus einem Polytetrafluorethylen (PTFE)-Kunststoff, das berührend gegenüber dem bewegten Bauteil (6,6') abdichtet,
wobei
a) das Dichtelement (4) zumindest in seiner Oberfläche durch Inkorporieren einer Kunststoffkomponente modifiziert wird, welche mit einem spritzfähigen Kunststoff zur Bildung des Tragkörpers (2,2') identisch oder damit verträglich ist,
b) das gemäß a) modifizierte Dichtelement (4) in eine Spritzgießform zum Formen des Tragkörpers (2,2') eingelegt wird,
c) der spritzfähige Kunststoff in die geschlossene Spritzgießform eingespritzt wird und dabei an dem modifizierten Dichtelement anschmilzt.

10. Verfahren nach Anspruch 9, dadurch **gekennzeichnet**, daß im Schritt a) lediglich derjenige Teilbereich der Oberfläche des Dichtelementes (4) modifiziert wird, der an den Kunststoff des Tragkörpers im Schritt c) anschmilzt.

11. Verfahren nach Anspruch 9, dadurch **gekennzeichnet**, daß beim Schließen der Spritzgießform das Dichtelement (4,4') zum Bilden einer Hinterschneidung dauerhaft verformt wird, hinter die beim nachfolgenden Einspritzen Kunststoff des Tragkörpers (2,2') fließt.

12. Verfahren nach Anspruch 11, dadurch **gekennzeichnet**, daß die tiefste Stelle (13) der Hinterschneidung (12) im Dichtelement (4) an den Rand des Tragkörpers (2) gelegt wird.

## Claims

1. A seal for movable structural components (6, 6'), such as piston rods or shafts, comprising a carrier body and a sealing member (4, 4') made of polytetrafluoroethylene (PTFE) compound material which seals through contact with respect to the movable structural component (6, 6') and is connected in substance lock to the carrier body (2, 2') made of plastics **characterized** in that the PTFE material is modified by admixture of a small quantity either of the plastic material of which the carrier body (2, 2') is made or of a component which is compatible with the same, that the carrier body (2) is made of a plastic material which is suitable for injection molding, and that a direct substance-lock connection is obtained by fusion of the sealing member (4, 4') to the carrier body (2, 2') during the injection molding.

2. The seal as claimed in claim 1, characterized in that the added quantity lies between 0.3 and 40 % by weight.

3. The seal as claimed in claim 1 or 2, characterized in that the added quantity lies between 5 and 10 % by weight.

4. The seal as claimed in any one of claims 1 to 3, characterized in that the surface of the sealing member (4, 4') is modified at least in that portion in which the substance-lock connection is to be made by incorporation of a componeht of the plastic material of the carrier body or a component which is compatible with the same.

5. The seal as claimed in claim 4, characterized in that the surface is modified by vapor deposition of the component.

6. The seal as claimed in claim 4, characterized in that the surface is modified by plasmapolymerization of the component.

7. The seal as claimed in any one of claims 1 to 6, characterized in that the sealing member (4, 4') in addition is connected in form lock to the carrier body (2, 2').

8. The seal as claimed in claim 7, characterized in that the sealing member (4) includes an undercut (12) which has a deepest place in the form of a stamping edge (13) located at the edge of the carrier body (2).

9. A method of manufacturing a seal for movable structural components (6, 6'), such as piston rods or shafts, comprising a carrier body (2, 2') and a sealing member (4) made of polytetrafluoroethylene (PTFE) material which seals through contact with respect to the movable structural component (6, 6'),
(a) the sealing member (4) being modified at least in its surface by incorporating a plastics component which is identical or compatible with a plastic material suitable for injection molding to form the carrier body (2, 2'),
(b) the sealing member (4) modified in accordance with (a) being placed in an injection mold to form the carrier body (2, 2'),
(c) the plastic material suitable for injection molding being injected into the closed injection mold and, at the same time, fusing to the modified sealing member.

10. The method as claimed in claim 9, characterized in that only that partial area of the surface of the sealing member (4) is modified, in step (a), which will fuse to the plastic material of the carrier body in step (c).

11. The method as claimed in claim 9, characterized in that the sealing member (4, 4') is deformed permanently, upon closing of the injection mold, to form an undercut behind which plastic material of the carrier body (2, 2') will flow during the subsequent injection step.

12. The method as claimed in claim 11, characterized in that the deepest place (13) of the undercut (12) in the sealing member (4) is positioned at the edge of the carrier body (2).

## Revendications

1. Joint d'étanchéité pour pièces en mouvement (6, 6') comme des tiges de piston ou des arbres, comportant un élément support ainsi qu'un élément d'étanchéité (4, 4') en un composé à base de plastique du type polytétrafluoroéthylène (PTFE) qui assure l'étanchéité de contact à l'égard de la pièce en mouvement (6, 6') et qui est relié, par continuité de matériau, avec l'élément support (2, 2') constitué de plastique, caractérisé par le fait que le plastique de type PTFE de l'élément d'étanchéité (4, 4') est modifié par apport, avec mélange, d'une petite quantité du plastique de l'élément support (2, 2') ou d'un composant compatible avec lui, que l'élément support (2) est constitué d'un plastique pouvant se mouler par injection et qu'une liaison directe, par continuité de matériau, est obtenue par fusion de l'élément d'étanchéité (4, 4') sur l'élément support (2, 2') lors du processus de moulage par injection.

2. Joint d'étanchéité selon la revendication 1, caractérisé par le fait que la quantité apportée et mélangée vaut entre 0,3 et 40 % en poids.

3. Joint d'étanchéité selon la revendication 1 ou 2, caractérisé par le fait que la quantité apportée et mélangée vaut entre 5 et 10 % en poids.

4. Joint d'étanchéité selon l'une des revendications 1 à 3, caractérisé par le fait que la surface de l'élément d'étanchéité (4, 4') est modifiée par incorporation d'un composant du plastique de l'élément support ou d'un composant qui lui est compatible, au moins dans la zone dans laquelle la liaison par continuité de matériau est à réaliser.

5. Joint d'étanchéité selon la revendication 4, caractérisé par le fait que la surface est modifiée par vaporisation du composant.

6. Joint d'étanchéité selon la revendication 4, caractérisé par le fait que la surface est modifiée par polymérisation, au plasma, du composant.

7. Joint d'étanchéité selon l'une des revendications 1 à 6, caractérisé par le fait que l'élément d'étanchéité (4, 4') est en outre relié à l'élément support (2, 2') par complémentarité de forme.

8. Joint d'étanchéité selon la revendication 7, caractérisé par le fait que l'élément d'étanchéité (4) présente une contre-dépouille (12) avec un emplacement le plus profond, situé au bord de l'élément support (2) sous forme d'une arête d'estampage (13).

9. Procédé de fabrication d'un joint d'étanchéité pour pièces en mouvement (6, 6') comme des tiges de piston ou des arbres, comportant un élément support (2, 2') ainsi qu'un élément d'étanchéité (4) en un plastique du type polytétrafluoroéthylène (PTFE) qui assure l'étanchéité de contact à l'égard de la pièce en mouvement (6, 6'), dans lequel :
a) on modifie l'élément d'étanchéité (2) au moins en surface, par incorporation d'un composant plastique qui est identique à un plastique, pouvant se mouler par injection, prévu pour former l'élément support (2, 2'), ou qui lui y compatible,
b) on place l'élément d'étanchéité (4), modifié selon a), dans un moule de moulage par injection pour mouler l'élément support (2, 2'),
c) on injecte le plastique, pouvant se mouler par injection, dans le moule de moulage par injection, fermé, et il vient s'y fondre sur l'élément d'étanchéité modifié.

10. Procédé selon la revendication 9, caractérisé par le fait que dans le pas a) on ne modifie que la zone partielle de la surface de l'élément d'étanchéité (4) qui vient fondre sur le plastique de l'élément support au pas c).

11. Procédé selon la revendication 9, caractérisé par le fait que, lors de la fermeture du moule de moulage par injection, l'élément d'étanchéité (4, 4') se déforme de façon permanente pour former une contre-dépouille derrière laquelle le plastique de l'élément support (2, 2') coule lors de l'injection qui vient à la suite.

12. Procédé selon la revendication 11, caractérisé par le fait que l'emplacement le plus profond (13) de la contre-dépouille (12) dans l'élément d'étanchéité (4) se trouve sur le bord de l'élément support (2).
